# EUROPÄISCHE PATENTSCHRIFT

(11) **EP 1 987 246 B1**
(45) Veröffentlichungstag und Bekanntmachung des Hinweises auf die Patenterteilung: **07.03.2012**
(21) Anmeldenummer: 08707169.2
(22) Anmeldetag: 22.01.2008
(51) Int. Cl.: F02G 5/02, B60H 1/32, F01K 23/06

(54) **KRAFTFAHRZEUGANTRIEBSSTRANG EINES KRAFTFAHRZEUGS MIT EINEM DRUCKLUFTSYSTEM**
MOTOR VEHICLE DRIVE TRAIN COMPRISING A COMPRESSED AIR SYSTEM
ENSEMBLE TRANSMISSION D'UN VÉHICULE À MOTEUR, POURVU D'UN SYSTÈME À AIR COMPRIMÉ

(30) Priorität: 05.02.2007 DE 102007006420
(43) Veröffentlichungstag der Anmeldung: 05.11.2008
(73) Patentinhaber: Voith Patent GmbH, 89522 Heidenheim (DE)
(72) Erfinder: BARTOSCH, Stephan, 89192 Rammingen (DE); BERGER, Jürgen, 89547 Gerstetten (DE); BAUSCH, Christian, 89347 Bubesheim (DE)
(74) Vertreter: Dr. Weitzel & Partner
(86) Internationale Anmeldenummer: PCT/EP2008/000436
(87) Internationale Veröffentlichungsnummer: WO 2008/095599

(56) Entgegenhaltungen:
- DE-A1- 3 021 691
- DE-A1- 10 221 157
- GB-A- 2 333 584

## Beschreibung

Die vorliegende Erfindung betrifft einen Kraftfahrzeugantriebsstrang eines Kraftfahrzeugs mit einem Druckluftsystem, wobei ein Kompressor zum Verdichten von Luft für das Druckluftsystem vorgesehen ist.

Kraftfahrzeuge und deren Druckluftsysteme, wie sie die vorliegende Erfindung betrifft, sind bekannt. Unter Kraftfahrzeug ist dabei jedes mittels Motorantriebskraft angetriebene Fahrzeug zu verstehen, unabhängig davon, ob es als Straßenfahrzeug, Schienenfahrzeug, Schiff oder anderes Fortbewegungsmittel ausgeführt ist. Der Begriff Druckluftsystem, welches beispielsweise der Speisung von Druckluftbremsen dient, umfasst dabei insbesondere mittels verdichteter Umgebungsluft befüllte, insbesondere abgeschlossene Systeme, ist jedoch nicht hierauf beschränkt. Beispielsweise kommen auch andere gasförmige Medien als Arbeitsmedium eines solchen Druckluftsystems in Betracht.

Um ein solches Druckluftsystem eines Kraftfahrzeugs zu befüllen beziehungsweise den Druck aufzubauen und aufrechtzuerhalten, ist herkömmlich wenigstens ein Kompressor vorgesehen, der in der Regel als Kolbenmaschine ausgeführt ist, und der vom Fahrzeugantriebsmotor, in der Regel einem Verbrennungsmotor, permanent oder, wenn eine entsprechende Kupplung vorgesehen ist, wahlweise angetrieben wird.

Aufgrund der verhältnismäßig hohen Druckzustände in solchen Druckluftsystemen, beispielsweise von 10 bis 12,5 bar, ist die erforderliche Antriebsleistung des Kompressors erheblich und kann schnell 5 kW oder mehr erreichen. Diese Leistung führt, wenn sie vom Verbrennungsmotor aufgebracht werden muss, zum einen zu einem erhöhten Kraftstoffverbrauch pro zurückgelegter Strecke des Fahrzeugs und zum anderen dazu, dass immer dann, wenn der Kompressor arbeitet, die entsprechende Leistung nicht für den Antrieb des Kraftfahrzeugs verwendet werden kann.

Das Dokument DE 30 21 691 A1 beschreibt einen Kraftfahrzeugantriebsstrang mit den Merkmalen gemäß dem Oberbegriff von Anspruch 1.

GB 2 333 584 A offenbart ein Abgaswärmerückgewinnungssystem für eine Brennkraftmaschine, wobei die Abgase die Wärmequelle für eine Dampfturbine bilden, die den Kolbenkompressor der Klimaanlage antreibt.

DE 102 21 157 A1 beschreibt eine Dampfturbine, die einen Kompressor antreibt. Der Kompressor verdichtet angesaugte Umgebungsluft auf einen bestimmten Enddruck.

Der Erfindung liegt die Aufgabe zugrunde, einen Kraftfahrzeugantriebsstrang eines Kraftfahrzeugs mit einem Druckluftsystem und einem Kompressor zum Verdichten von Luft für das Druckluftsystem anzugeben, mittels welchem der Kompressor energiesparender und wenigstens teilweise ohne Beeinträchtigung der Antriebsleistung des Kraftfahrzeugs angetrieben werden kann. Dabei soll vorteilhaft eine kompakte und kostengünstig herstellbare Ausführungsform geschaffen werden.

Die erfindungsgemäße Aufgabe wird durch einen Kraftfahrzeugantriebsstrang mit den Merkmalen von Anspruch 1 gelöst. Die abhängigen Ansprüche beschreiben vorteilhafte und besonders zweckmäßige Ausgestaltungen der Erfindung.

Der erfindungsgemäße Kraftfahrzeugantriebsstrang weist wenigstens einen Antriebsmotor zum Antrieb des Kraftfahrzeugs über eine von diesem angetriebene Fahrzeugantriebswelle auf. Der Antriebsmotor kann beispielsweise als Verbrennungsmotor, insbesondere Dieselmotor, ausgeführt sein. Es sind jedoch auch andere Ausführungsformen möglich, beispielsweise Elektromotoren, Hybridmotoren, dampfbetriebene Motoren oder dergleichen.

Erfindungsgemäß ist ein Kompressor vorgesehen, mittels welchem die Luft (allgemein ein Medium) für ein Druckluftsystem des Kraftfahrzeugs verdichtet werden kann. Der Kompressor ist insbesondere von dem Verbrennungsmotor wahlweise antreibbar oder wird von diesem permanent angetrieben.

Ferner ist zum Antrieb des Kompressors ein Antriebsaggregat in Form einer dampfgetriebenen Expansionsmaschine vorgesehen, mittels welcher der Kompressor antreibbar ist. Die Expansionsmaschine kann beispielsweise als zweites Antriebsaggregat neben dem Fahrzeugantriebsmotor, insbesondere Verbrennungsmotor, oder einem Elektromotor vorgesehen sein.

Sowohl die Expansionsmaschine als auch der Kompressor können, müssen jedoch nicht, als Kolbenmaschine ausgeführt sein. Insbesondere kommt eine Rotationskolbenmaschine oder eine Hubkolbenmaschine in Betracht, die einstufig, zweistufig oder mehrstufig ausgeführt ist. Bei Hubkolbenmaschinen ist entsprechend ein Zylinder vorgesehen, oder es sind zwei oder mehr Zylinder vorgesehen. Bei Rotationskolbenmaschinen kann eine entsprechende Anzahl von Kompressionsräumen vorgesehen sein.

Selbstverständlich kommen auch andere Formen von Expansionsmaschinen in Betracht, beispielsweise eine Turbomaschine beziehungsweise eine Turbine.

Besonders vorteilhaft ist es, wenn die Expansionsmaschine zusätzlich in einer Triebverbindung mit der Fahrzeugantriebswelle steht oder in eine solche schaltbar ist, um das Kraftfahrzeug und/oder andere Aggregate des Kraftfahrzeugs mittels der Expansionsmaschine anzutreiben. Somit kann die Antriebsleistung der Expansionsmaschine zusätzlich oder anstelle von Antriebsleistung des Fahrzeugantriebsmotors zum Beschleunigen des Fahrzeugs oder Antreiben weiterer Aggregate verwendet werden.

Die Expansionsmaschine ist in der Regel in einem Dampfkreislauf angeordnet, welcher einen Dampferzeuger, einen Kondensator und eine Flüssigkeitspumpe umfasst. In dem Dampferzeuger wird das Arbeitsmedium des Dampfkreislaufes verdampft, anschließend der Expansionsmaschine zugeführt, in welcher es expandiert beziehungsweise entspannt wird. Der aus der Expansionsmaschine abgeleitete expandierte Dampf wird dann dem Kondensator zugeführt, in welchem er kondensiert wird. Schließlich pumpt eine Flüssigkeitspumpe das dann flüssige Arbeitsmedium zurück in den Dampferzeuger. Es ist möglich, aber nicht zwingend, einen Kondensat- oder Flüssigkeitsspeicher oder sonstige Speicher im Dampfkreislauf zur Zwischenspeicherung des Arbeitsmediums vorzusehen.

Bei einer energetisch besonders günstigen Ausführungsform kann der Dampferzeuger mit Abwärme des Fahrzeugantriebsmotors, insbesondere des Verbrennungsmotors, beaufschlagt werden, so dass das Arbeitsmedium des Dampfkreislaufes wenigstens teilweise oder vollständig durch die Abwärme des Fahrzeugantriebsmotors verdampft wird. Die Abwärme kann dabei auf verschiedene Arten zum Dampferzeuger beziehungsweise in den Dampfkreislauf geleitet werden. Beispielsweise kann ein Kühlmedium für die Fahrzeugantriebsmaschine, beispielsweise Kühlwasser, verwendet werden, welches entsprechend durch den Dampferzeuger geleitet wird. Wenn der Fahrzeugantriebsmotor als Verbrennungsmotor ausgeführt ist, ist es zusätzlich oder alternativ möglich, Wärme aus den Abgasen des Verbrennungsmotors zur Dampferzeugung in dem Dampferzeuger zu verwenden.

Gemäß einer weiteren Ausführungsform ist zusätzlich oder alternativ ein Brenner vorgesehen, um mittels Verbrennungswärme in dem Dampferzeuger Dampf zu erzeugen. Der Brenner kann beispielsweise mit dem Treibstoff des Verbrennungsmotors betrieben werden.

Da beim Verdichten von Luft in dem Kompressor Wärme entsteht, die bisher häufig mittels Kühlwasser oder einer anderen Kühlung ungenutzt oder sogar aufwendig "weggekühlt" werden musste, wird gemäß einer besonders vorteilhaften Ausführungsform der vorliegenden Erfindung diese Wärme des Kompressors zur Dampferzeugung des Dampfes für die Expansionsmaschine verwendet. Hierzu wird durch ein geeignetes Medium Wärme aus dem Kompressor abgeleitet und dem Dampfkreislauf, insbesondere in Richtung der Arbeitsmediumströmung im Dampfkreislauf hinter der Flüssigkeitspumpe und vor dem Dampferzeuger zugeleitet. Alternativ oder zusätzlich ist es möglich, den Dampfkreislauf durch den Kompressor zu führen, das heißt das Arbeitsmedium des Dampfkreislaufes wird durch den Kompressor, insbesondere durch dessen Gehäuse oder - bei Ausführung als Hubkolbenmaschine - insbesondere durch dessen Zylinderkopf oder Zylinderköpfe geleitet, so dass eine Wärmeübertragung der Kompressionswärme unmittelbar auf das Arbeitsmedium des Dampfkreislaufes oder über ein Zwischenmedium erfolgt.

Um eine kostengünstige und besonders kompakte Ausführung zu schaffen, können die Expansionsmaschine und der Kompressor sowohl in einem gemeinsamen als auch in getrennten Gehäusen angeordnet sein. Jede Maschine - Expansionsmaschine und Kompressor - können gemäß einer Ausführungsform eine eigene Welle - Expansionsmaschinenabtriebswelle und Kompressorantriebswelle - aufweisen, welche getrennt voneinander ausgeführt sind. Die beiden Wellen können in Axialrichtung derselben nebeneinander, vorteilhaft fluchtend zueinander angeordnet sein. Alternativ ist es auch möglich, die Wellen in Radialrichtung nebeneinander oder besonders vorteilhaft konzentrisch zueinander anzuordnen. Letzteres wird beispielsweise dadurch erreicht, dass wenigstens eine der beiden Wellen als Hohlwelle ausgeführt ist, welche die andere Welle, die ebenfalls als Hohlwelle oder als Vollwelle ausgeführt sein kann, umschließt.

Sowohl der Antrieb des Kompressors mittels der Fahrzeugantriebsmaschine, insbesondere dem Verbrennungsmotor, als auch der Antrieb des Kompressors mittels der dampfgetriebenen Expansionsmaschine, kann über eine schaltbare mechanische oder hydrodynamische Kupplung erfolgen. Dabei können zwei oder mehr getrennt voneinander angeordnete Kupplungen vorgesehen sein, oder eine Kupplung ist als Doppelkupplung oder Mehrfachkupplung ausgeführt, welche wenigstens eine erste Leistungsschnittstelle zum Einleiten von Antriebsleistung für den Kompressor, zum Beispiel von dem Fahrzeugsantriebs- beziehungsweise Verbrennungsmotor, und zum Ausleiten von Leistung von der Expansionsmaschine aufweist, zum Beispiel auf die Fahrzeugantriebswelle, eine zweite Leistungsschnittstelle, die mit dem Kompressor in einer Triebverbindung steht, zum Ausleiten der über die erste Leistungsschnittstelle eingeleiteten Antriebsleistung für den Kompressor, und eine dritte Leistungsschnittstelle, die in einer Triebverbindung mit der Expansionsmaschine steht, zum Einleiten von Antriebsleistung von der Expansionsmaschine.

Bei Anordnung der beiden Maschinen - Kompressor und dampfbetriebene Expansionsmaschine - in getrennten Gehäusen, welche jedoch insbesondere miteinander verbunden sein können, kann mindestens eine der beiden Maschinen beziehungsweise mindestens eines der beiden Gehäuse mit einem Durchtrieb ausgeführt sein, das heißt neben einem Leistungseingang, über welchen die in dem Gehäuse angeordnete Maschine antreibbar ist, einen zweiten Leistungseingang aufweisen, der mit einem Leistungsausgang, insbesondere auf der entgegengesetzten Seite des Gehäuses, verbunden ist, insbesondere starr angeschlossen ist, um die Antriebsleistung, die an dem zweiten Leistungseingang anliegt, auf den Leistungsausgang zu übertragen. Der Leistungsausgang kann dann in einer Triebverbindung mit der Maschine des zweiten Gehäuses stehen, um so die Maschine des zweiten Gehäuses anzutreiben und einen "Leistungsbypass" mit Zahnrad- oder Riemen-/Kettenverbindungen um das erste Gehäuse herum zu vermeiden.

Die Maschinen - Expansionsmaschine und Kompressor - in den beiden Gehäusen können sich ein oder mehrere Lager teilen, das heißt wenigstens ein Lager in oder an dem ersten Gehäuse dient sowohl zum Lagern der Maschine in dem ersten Gehäuse als auch zum Lagern der Maschine in dem zweiten Gehäuse. Unter Lagerung der Maschine ist dabei wenigstens die Lagerung der Antriebswelle des Kompressors beziehungsweise der Abtriebswelle der Expansionsmaschine zu verstehen. Eine oder beide Wellen können als Kurbelwelle oder auch als lineare Welle mit darauf angeordneten Nocken beziehungsweise Nockenscheiben ausgeführt sein, um die notwendige Exzentrizität beim Ausführen der Maschinen äls Hubkolbenmaschinen zu erreichen.

Die Erfindung soll nachfolgend anhand von möglichen Ausführungsformen kurz erläutert werden.

Es zeigen:
- Figur 1: eine schematische Darstellung der möglichen Anordnung von Kompressor und Expansionsmaschine seitlich an einem Verbrennungsmotor;
- Figur 2: eine mögliche Gestaltung des Antriebs des Kompressors und der Expansionsmaschine, welche in einem gemeinsamen Gehäuse angeordnet sind, über eine Doppelkupplung;
- Figur 3: eine Gestaltung gemäß der Figur 2, jedoch mit getrennten Gehäusen für die Expansionsmaschine und den Kompressor;
- Figur 4: eine Ausführungsform gemäß der Figur 3, jedoch mit zwei getrennt zueinander vorgesehenen Kupplungen und einem Durchtrieb durch eines der beiden Gehäuse, hier dem Gehäuse der Expansionsmaschine;
- Figur 5: eine Ausführungsform gemäß der Figur 4, jedoch mit einer verminderten Anzahl von Lagern;
- Figur 6: eine Ausführungsform gemäß der Figur 5, jedoch mit einer Doppelkupplung anstelle von zwei Einzelkupplungen;
- Figur 7: eine schematische Darstellung eines möglichen Dampfkreislaufes.

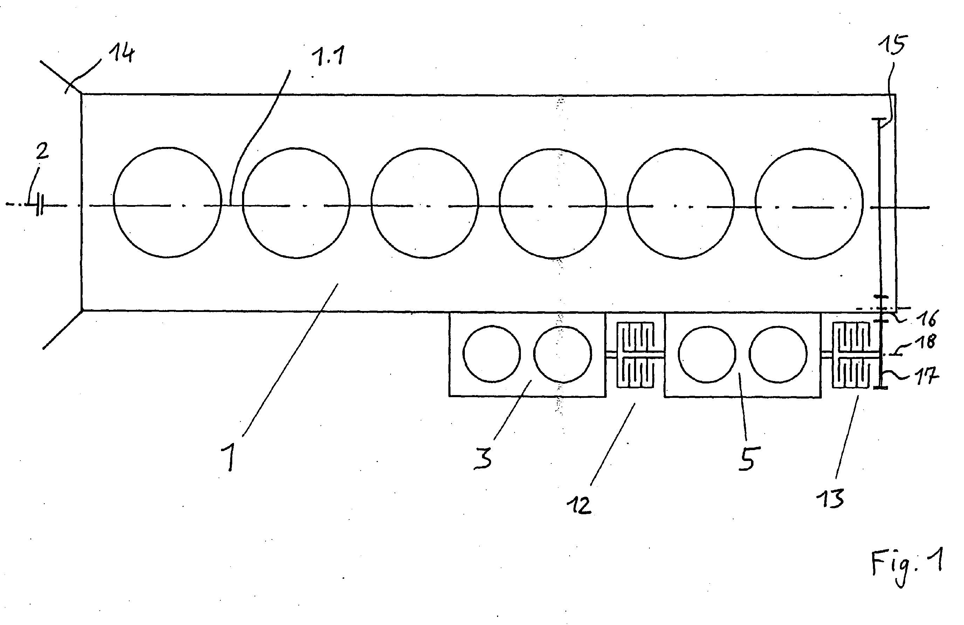

In der Figur 1 erkennt man einen Verbrennungsmotor 1, beispielsweise Dieselmotor, zum Antrieb des Kraftfahrzeugs über ein am Verbrennungsmotor 1 angeschlossenes Getriebe 14. Der Verbrennungsmotor 1 treibt hierzu eine Fahrzeugantriebswelle 2 an, beispielsweise die Getriebeeingangswelle, welche in einer Triebverbindung mit der Motorabtriebswelle 1.1, vorliegend in Form einer Kurbelwelle, steht.

Bei der gezeigten Ausführungsform ist das Getriebe 14 auf der Hinterseite des Verbrennungsmotors 1 angeordnet, und die Motorabtriebswelle 1.1 (Kurbelwelle) reicht bis zur Vorderseite des Verbrennungsmotors 1, auf welcher sie ein Zahnrad 15 trägt. Das Zahnrad 15 steht in einer Triebverbindung, hier in kämmendem Eingriff, mit den Zahnrädern 16 und 17, wobei das Zahnrad 17 eine Nebenabtriebswelle 18 des Verbrennungsmotors 1 antreibt. Anstelle der gezeigten Anzahl von Zahnrädern kann auch eine andere Anzahl von Zahnrädern oder ein Riementrieb, ein Kettentrieb oder dergleichen vorgesehen sein.

Die Nebenabtriebswelle 18 beziehungsweise das Zahnrad 17 ist wahlweise in eine Triebverbindung mit dem Kompressor 3 und der dampfbetriebenen Expansionsmaschine 5 schaltbar, um den Kompressor 3 anzutreiben oder von der Expansionsmaschine 5 angetrieben zu werden. Somit kann entweder Leistung von der Motorabtriebswelle 1.1 in den Kompressor 3 zum Verdichten von Luft eingeleitet werden, oder Antriebsleistung durch Expansion von Dampf in der Expansionsmaschine 5 kann auf die Motorabtriebswelle 1.1 übertragen werden, um diese und damit das Fahrzeug anzutreiben.

Bei der in der Figur 1 gezeigten Ausführung sind sowohl der Kompressor 3 als auch die Expansionsmaschine 5 jeweils als zweistufige Hubkolbenmaschine ausgeführt, das heißt jeweils als Hubkolbenmaschine, die zwei Zylinder aufweist. Selbstverständlich ist es möglich, die Anzahl der Zylinder oder die Bauform zu variieren. So können weniger oder mehr Zylinder vorgesehen sein, oder die Maschinen können als Rotationskolbenmaschinen oder Strömungsmaschinen ausgeführt sein.

Bei der gezeigten Ausführungsform ist ferner die Expansionsmaschine 5 zwischen dem Kompressor 3 und dem vorderen Ende des Verbrennungsmotors 1 mit dem Antrieb der Nebenabtriebswelle 18 angeordnet, und der Kompressor 3 wird über einen Durchtrieb durch die Expansionsmaschine 5 angetrieben. Diese Reihenfolge könnte auch andersherum ausgeführt sein, insbesondere mit einem Durchtrieb durch den Kompressor 3, um Antriebsleistung von der Expansionsmaschine 5 auf die Verbrennungsmotorabtriebswelle 1.1 zu übertragen.

Die in der Figur 1 gezeigte Anordnung umfasst zwei Kupplungen, nämlich eine erste Kupplung 12, mittels welcher der Kompressor 3 in eine Triebverbindung mit der Expansionsmaschine 5 und/oder der Motorabtriebswelle 1.1 schaltbar ist, und eine zweite Kupplung 13, mittels welcher die Expansionsmaschine 5 in eine Triebverbindung mit der Antriebsmotorabtriebswelle 1.1 schaltbar ist. Durch entsprechendes Vorsehen weiterer Kupplungen und/oder Triebverbindungen beziehungsweise Durchtriebe ist es auch möglich, weitere von der Motorabtriebswelle 1.1 und/oder der Expansionsmaschine 5 antreibbare oder die Motorabtriebswelle 1.1 beziehungsweise allgemein die Fahrzeugantriebswelle 2 und/oder den Kompressor 3 antreibende Aggregate insbesondere fluchtend mit dem Kompressor 3 beziehungsweise der Expansionsmaschine 5 oder parallel hierzu anzuordnen. So könnte beispielsweise bei der in der Figur 1 gezeigten Darstellung links von dem Kompressor 3 ein weiteres Aggregat seitlich am Verbrennungsmotor 1 positioniert werden, das ebenfalls von der Nebenabtriebswelle 18 angetrieben wird oder die Nebenabtriebswelle 18 antreibt. Der Kompressor 3 wäre mit einem entsprechenden Durchtrieb zu versehen, der an dem der Expansionsmaschine 5 entgegengesetzten Ende des Kompressor 3 angeordnet ist. Hierfür könnte eine weitere Kupplung vorgesehen sein oder eine der gezeigten Kupplungen könnte einen zusätzlichen Leistungsausgang aufweisen. Alternativ wäre es auch möglich, einen Durchtrieb vom Leistungseingang (am rechten Ende in der Figur 1) der Nebenabtriebswelle 18 bis zu dem weiteren Aggregat mit oder ohne Kupplungen vorzusehen.

Eine oder mehrere der gezeigten und/oder genannten Kupplungen könnten anstelle der gezeigten Ausführungsform mit Lamellenpaketkupplungen auch abweichend gestaltet sein, beispielsweise als einfache, auch trockenlaufende Reibkupplungen oder hydrodynamische Kupplungen.

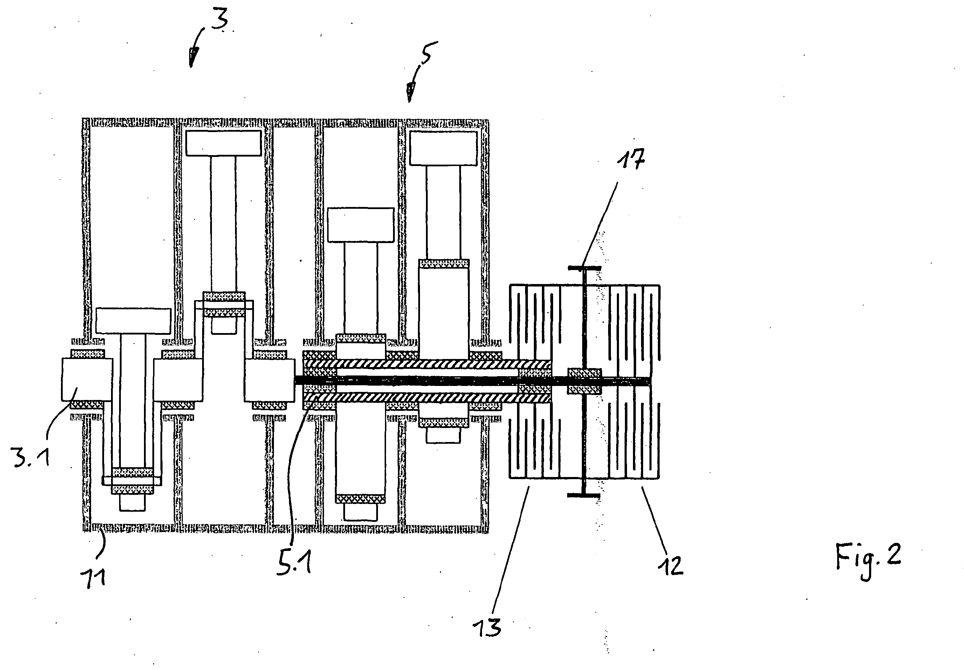

In den Figuren 2 bis 5 erkennt man verschiedene Möglichkeiten der Gestaltung und Anordnung des Kompressors 3, der Expansionsmaschine 5 sowie der Wellen, Kupplungen und Gehäuse derselben. Selbstverständlich sind weitere Ausführungsformen denkbar. Beispielsweise kann die Reihenfolge von Kompressor 3 und Expansionsmaschine 5 vertauscht werden.

Gemäß der Figur 2 wird die Antriebsleistung vom Verbrennungsmotor (nicht dargestellt) über eine Doppelkupplung, umfassend die erste Kupplung 12 und die zweite Kupplung 13, auf den Kompressor 3 übertragen, nämlich dann, wenn die erste Kupplung 12 geschlossen ist. Wenn die zweite Kupplung 13 geschlossen ist, kann Antriebsleistung von der Expansionsmaschine 5 auf das Zahnrad 17 (oder einen anderen geeigneten Leistungsstrang) übertragen werden, um die Motorabtriebswelle (nicht dargestellt) oder allgemein eine Fahrzeugantriebswelle anzutreiben. Wenn beide Kupplungen 12,13 geschlossen sind, kann Antriebsleistung von der Expansionsmaschine 5 auf den Kompressor 3 übertragen werden, gegebenenfalls unter Trennung des Leistungsflusses zu oder von dem Verbrennungsmotor mittels einer weiteren Kupplung (nicht dargestellt). Somit weist die Doppelkupplung zwei Leistungseingänge und zwei Leistungsausgänge auf, wobei jedoch ein Leistungseingang - im Betrieb mit durch den Verbrennungsmotor angetriebenem Kompressor 3 - und ein Leistüngsausgang - im Betrieb mit von der Expansionsmaschine 5 angetriebenem Fahrzeug - durch dieselbe Schnittstelle, hier dem mit dem Gehäuse der Doppelkupplung in Triebverbindung stehenden Zahnrad 17 gebildet werden.

Der Kompressor 3 und die Expansionsmaschine 5 sind in einem gemeinsamen Gehäuse 11 und in Axialrichtung nebeneinander angeordnet. Der Kompressor 3 weist eine Kompressorantriebswelle 3.1 auf, und die Expansionsmaschine 5 weist eine Expansionsmaschinenabtriebswelle 5.1 auf. Die Kompressorantriebswelle 3.1 ist, insbesondere starr, an einem Durchtrieb, beispielsweise einer durchgehenden Welle durch die Expansionsmaschine 5 angeschlossen oder wird wenigstens teilweise konzentrisch von der Expansionsmaschinenabtriebswelle 5.1 umschlossen. Die Kompressorantriebswelle 3.1 ist in drei Lagern gelagert, wovon jeweils zwei eine Kurbel der Kurbelwelle, als welche die Kompressorantriebswelle 3.1 ausgeführt ist, in Axialrichtung beidseitig zwischen sich einschließen. Die Kompressorabtriebswelle 5.1 ist entsprechend gelagert, wobei diese jedoch nicht als Kurbelwelle, sondern als geradlinige Welle mit aufgebrachten Exzenterscheiben ausgeführt ist.

Das Zahnrad 17 ist auf der Kompressorantriebswelle 3.1 beziehungsweise dem Durchtrieb durch die Expansionsmaschine 5 für diese relativgelagert.

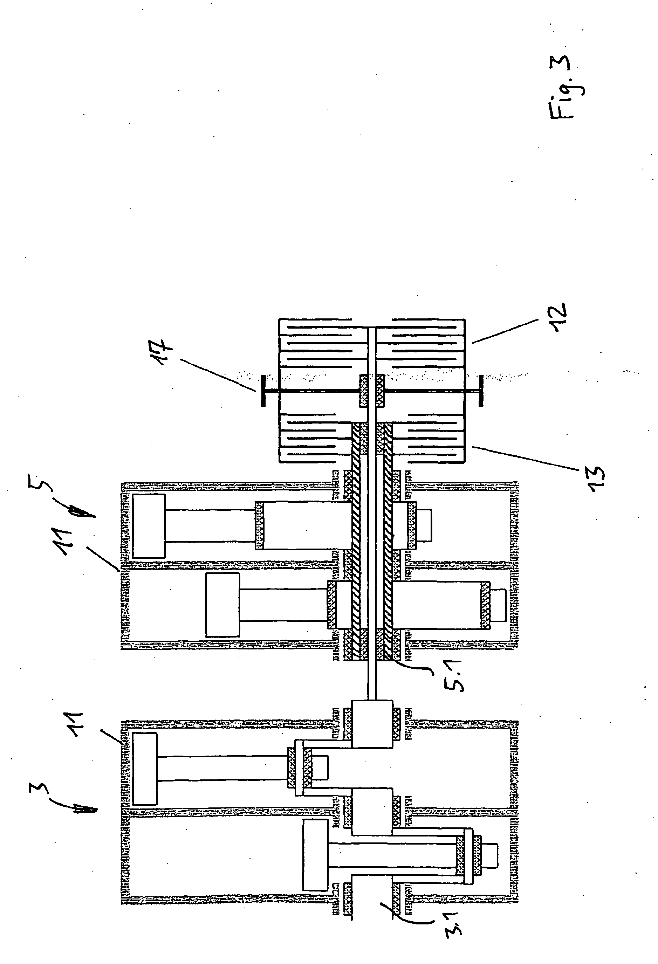

Die Ausführung gemäß der Figur 3 unterscheidet sich von jener der Figur 2 dadurch, dass der Kompressor 3 und die Expansionsmaschine 5 in getrennten Gehäusen 11 gelagert sind, wobei ein entsprechender Durchtrieb durch das Gehäuse 11 der Expansionsmaschine 5 vorgesehen ist, hier in Form einer starren Welle, die von der Expansionsmaschinenabtriebswelle 5.1 umschlossen wird.

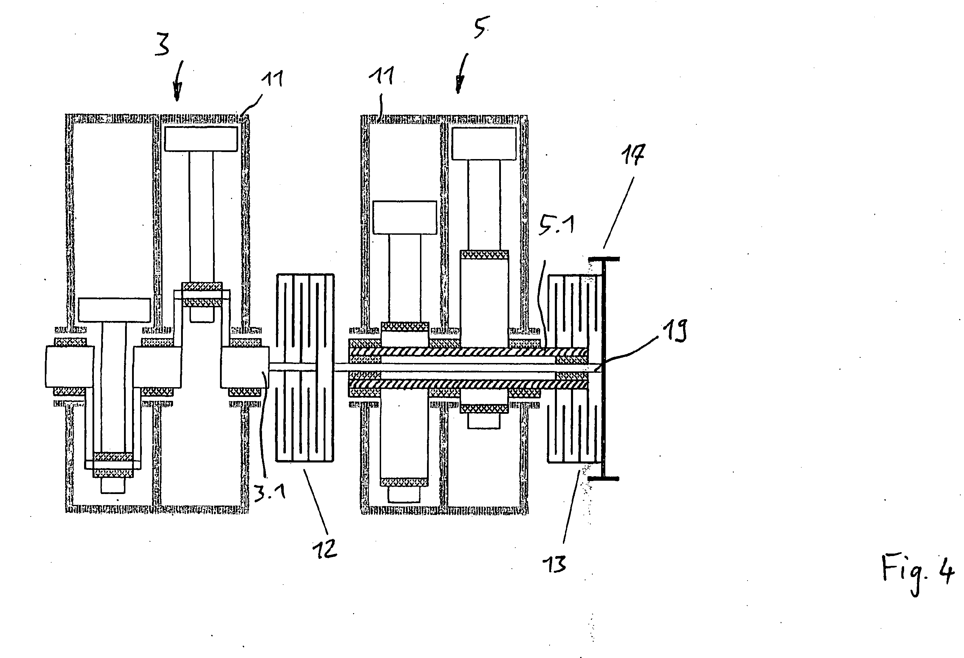

Gemäß der Figur 4 sind anstelle einer Doppelkupplung zwei getrennt zueinander angeordnete Einzelkupplungen 12 und 13 vorgesehen. Die erste Kupplung 12 zum Zuschalten des Kompressors 3 ist zwischen dem Gehäuse 11 der Expansionsmaschine 5 und dem Gehäuse 11 des Kompressors 3 angeordnet. Selbstverständlich wäre es auch möglich, diese erste Kupplung 12 innerhalb von einem der beiden Gehäuse 11 anzuordnen, beispielsweise innerhalb des Kompressorgehäuses. Die zweite Kupplung 13 ist zwischen dem Eingang der Nebenabtriebswelle, hier in Form des Zahnrads 17, und dem Gehäuse 11 der Expansionsmaschine 5 angeordnet, wobei vorliegend das Zahnrad 17 drehstarr an der Kupplung 13 angeschlossen ist. Wiederum ist ein Durchtrieb durch das Expansionsmaschinengehäuse 11 vorgesehen, hier in Form einer starren Welle 19, die mit einer Hälfte der ersten Kupplung 12 drehstarr verbunden ist beziehungsweise in einer Triebverbindung mit dieser steht. Die zweite Hälfte der ersten Kupplung 12 ist drehstarr an der Kompressorantriebswelle 3.1 angeschlossen.

Die erste Hälfte der zweiten Kupplung 13 ist drehstarr an der Expansionsmaschinenabtriebswelle 5.1 angeschlossen oder steht in einer Triebverbindung mit dieser, und die zweite Hälfte der zweiten Kupplung 13 ist drehstarr am Zahnrad 17 oder einer anderen geeigneten Triebverbindung angeschlossen.

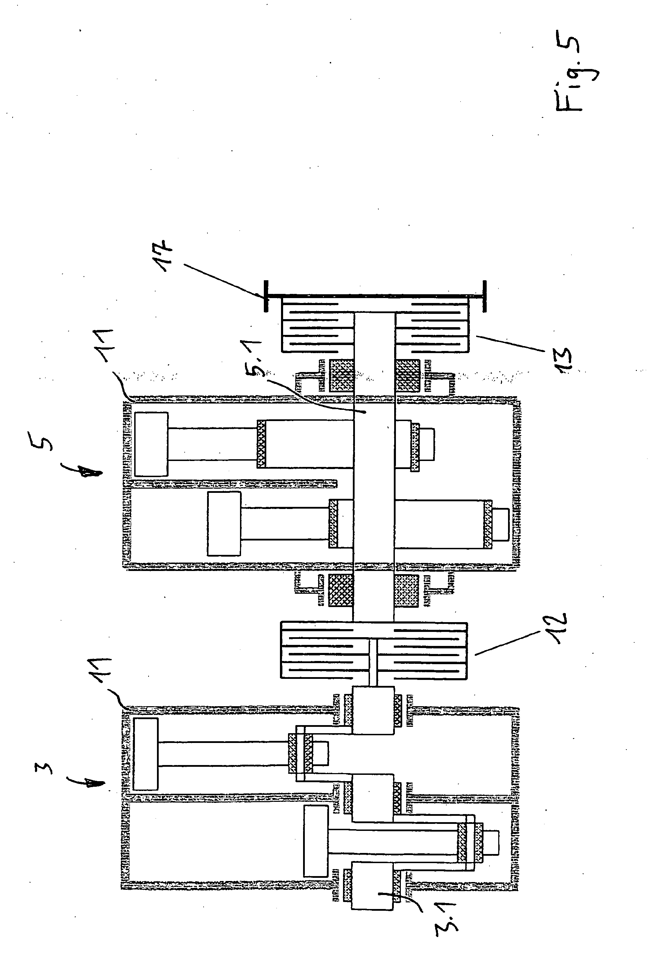

Die Ausführung gemäß der Figur 5 zeichnet sich dadurch aus, dass die Expansionsmaschinenabtriebswelle 5.1 ausschließlich durch Lager außerhalb des Gehäuses 11 der Expansionsmaschine 5 gelagert ist, wobei diese Lager insbesondere zum Lagern jeweils einer Kupplungshälfte der beiden Kupplungen 12, 13, die entsprechend der Figur 4 ausgeführt sind, dienen. Insbesondere, wenn die Kupplungen 12, 13 als nasslaufende Kupplungen ausgeführt sind, ist es vorteilhaft, diese Lager mit demselben Schmiermedium wie die Kupplungen 12, 13 zu schmieren.

Selbstverständlich ist es abweichend von der in der Figur 5 gezeigten Darstellung auch möglich, die Kompressorantriebswelle 3.1 ausschließlich mit Lagern außerhalb des Gehäuses 11 des Kompressors 3 zu lagern, welche insbesondere ebenfalls eine zusätzliche Lagerfunktion übernehmen.

Gemäß der Ausführungsform in der Figur 5 ist es somit möglich, dass die Lager von einer beziehungsweise zwei Komponenten (beispielsweise der Kupplungen 12, 13) die Lagerungskräfte einer dritten Komponente (beispielsweise der Expansionsmaschine 5 beziehungsweise deren Abtriebswelle 5.1) übernehmen.

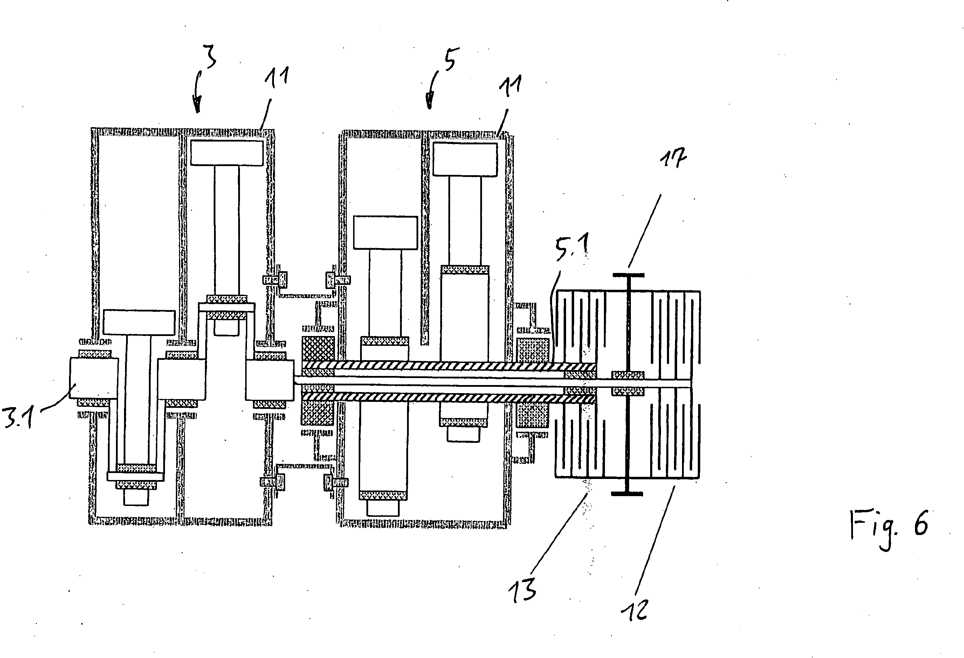

Gemäß der Ausführungsform in der Figur 6 übernehmen wiederum zwei Komponenten die Lagerungskräfte einer dritten Komponente, hier wiederum der Expansionsmaschine 5. Hierbei wird die Expansionsmaschinenabtriebswelle 5.1 an einem axialen Ende beziehungsweise im Bereich des axialen Endes durch ein Lager gelagert, welches zugleich die erste Hälfte der zweiten Kupplung 13 lagert. Am entgegengesetzten axialen Ende wird die Expansionsmaschinenabtriebswelle 5.1 durch ein Lager gelagert, welches zugleich als Lager für die Kompressorantriebswelle 3.1 beziehungsweise einen entsprechenden Durchtrieb durch die Expansionsmaschine 5 dient.

Abweichend von der in der Figur 6 gezeigten Darstellung könnte beispielsweise das im Gehäuse 11 des Kompressors 3 auf der der Expansionsmaschine 5 zugewandten Seite neben der Kurbel angeordnete äußere Lager entfallen, da zwischen Expansionsmaschine 5 und Kompressor 3 keine weitere Kupplung angeordnet ist.

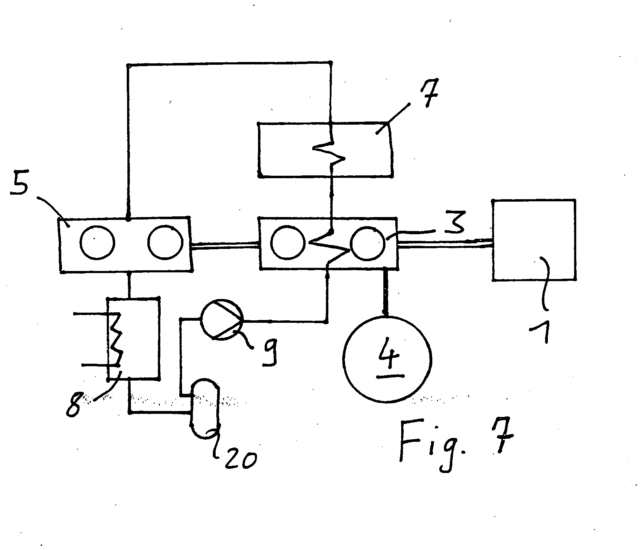

In der Figur 7 erkennt man einen typischen Dampfkreislauf für die Expansionsmaschine 5. Dieser umfasst in der folgenden Durchströmungsreihenfolge einen Vorratsbehälter 20, eine Flüssigkeitspumpe 9, einen Dampferzeuger 7, die Expansionsmaschine 5, und einen Kondensator 8, aus welchem das Kondensat wiederum in den Vorratsbehälter 20 strömt. Wie man sieht, durchströmt das Arbeitsmedium des Dampfkreislaufes den Kompressor 3 in einer wärmeleitenden Verbindung, bevor es dem Dampferzeuger 7 zugeführt wird. Hierbei kann das Arbeitsmedium die Kompressionswärme aufnehmen, die entsteht, wenn der vom Verbrennungsmotor 1 und/oder der Expansionsmaschine 5 angetriebene Kompressor 3 Luft für das Druckluftsystem 4 verdichtet und in dieses einspeist.

Durch die erfindungsgemäße Ausführung mit einem Antrieb des Kompressors für ein Druckluftsystem eines Kraftfahrzeugs mittels einer Expansionsmaschine kann zum einen Bauraum eingespart werden und zum anderen Wärme des Kompressors energetisch sinnvoll genutzt werden. Ferner stellt die Expansionsmaschine, insbesondere wenn sie als Hubkolbenmaschine ausgeführt ist, ein besonders hohes Drehmoment bereits bei kleinsten Drehzahlen, insbesondere bei jeder Drehzahl, zur Verfügung, was das Anlaufen des Kompressors erleichtert. Insbesondere ist es nicht mehr notwendig, den Kompressor, wenn er gestartet wird, zunächst gegen Umgebungsdruck arbeiten zu lassen, sondern er kann sofort in das Druckluftsystem, welches beispielsweise einen Druck zwischen 8 und 12,5 bar oder 10 und 12,5 bar aufweist, speisen Selbstverständlich können auch abweichende, insbesondere höhere Drücke oder im (teil)entleerten Zustand niedrigere Drücke im Druckluftsystem vorherrschen.

Abweichend von den in den Figuren dargestellten Ausführungen kann der Kompressor 3 auch parallel zur Expansionsmaschine 5 angeordnet sein, wobei bei sämtlichen Ausführungen der Leistungsfluss zum Kompressor 3 und zur Expansionsmaschine 5 parallel oder in Reihe zueinander ausgeführt sein kann.

## Patentansprüche

1. Kraftfahrzeugantriebsstrang
1.1 mit einem Fahrzeugantriebsmotor zum Antreiben des Kraftfahrzeugs über eine vom Fahrzeugantriebsmotor angetriebene Fahrzeugantriebswelle (2);
1.2 mit einem wahlweise antreibbaren oder permanent angetriebenen Kompressor (3) zum Verdichten von Luft für ein Druckluftsystem (4) des Kraftfahrzeugs; wobei
1.3 dem Kompressor (3) wenigstens ein Antriebsaggregat in Form einer dampfgetriebenen Expansionsmaschine (5) zugeordnet ist, mittels welcher der Kompressor (3) antreibbar ist; **dadurch gekennzeichnet, dass**
1.4 der Kompressor (3) mittels des Fahrzeugantriebsmotors und/oder einem zusätztichen Antrieb antreibbar ist oder angetrieben wird, und dass die dampfgetriebene Expansionsmaschine (5) dem Kompressor (3) als zweites Antriebsaggregat zugeordnet ist, mit welcher der Kompressor (3) zusätzlich zu dem Fahrzeugantriebsmotor und/oder dem zusätzlichen Antrieb antreibbar ist.

2. Kraftfahrzeugantriebsstrang gemäß Anspruch 1, **dadurch gekennzeichnet, dass** der Fahrzeugantriebsmotor ein Verbrennungsmotor (1) ist, und dass der zusätzliche Antrieb insbesondere ein Elektromotor ist.

3. Kraftfahrzeugantriebsstrang gemäß einem der Ansprüche 1 oder 2, **dadurch gekennzeichnet, dass** die Expansionsmaschine (5) und/oder der Kompressor (3) als Kolbenmaschine, insbesondere Rotationskolbenmaschine oder Hubkolbenmaschine ausgeführt sind/ist.

4. Kraftfahrzeugantriebsstrang gemäß einem der Ansprüche 1 bis 3, **dadurch gekennzeichnet, dass** die Expansionsmaschine (5) in einer Triebverbindung mit der Fahrzeugantriebswelle (2) steht oder in eine solche schaltbar ist, um das Kraftfahrzeug mittels der Expansionsmaschine (5) anzutreiben.

5. Kraftfahrzeugantriebsstrang gemäß einem der Ansprüche 1 bis 4, **dadurch gekennzeichnet, dass** die Expansionsmaschine (5) in einem Dampfkreislauf (6), umfassend einen Dampferzeuger (7), einen Kondensator (8) und eine Flüssigkeitspumpe (9), angeordnet ist, und der Dampferzeuger (7) mit Abwärme des Kraftfahrzeugantriebsmotors, insbesondere des Verbrennungsmotors (1), oder mit Wärme aus den Abgasen des Verbrennungsmotors (1) beaufschlagt wird.

6. Kraftfahrzeugantriebsstrang gemäß Anspruch 5, **dadurch gekennzeichnet, dass** zusätzlich ein Brenner (10) zum Beaufschlagen des Dampferzeugers (7) mit Verbrennungswärme vorgesehen ist, wobei der Brenner (10) insbesondere mit dem Treibstoff des Verbrennungsmotors (1) betrieben wird.

7. Kraftfahrzeugantriebsstrang gemäß einem der Ansprüche 1 bis 6, **dadurch gekennzeichnet, dass** die Expansionsmaschine (5) und der Kompressor (3) in einem gemeinsamen Gehäuse (11) angeordnet sind.

8. Kraftfahrzeugantriebsstrang gemäß einem der Ansprüche 1 bis 6, **dadurch gekennzeichnet, dass** die Expansionsmaschine (5) und der Kompressor (3) in getrennten Gehäusen (11) angeordnet sind.

9. Kraftfahrzeugantriebsstrang gemäß einem der Ansprüche 1 bis 8, **dadurch gekennzeichnet, dass** die Expansionsmaschine (5) eine Abtriebswelle (5.1) und der Kompressor (3) eine Kompressorantriebswelle (3.1) aufweist, welche getrennt voneinander ausgeführt sind, und welche insbesondere in Axialrichtung nebeneinander, vorteilhaft fluchtend zueinander, in Radialrichtung nebeneinander oder konzentrisch zueinander angeordnet sind.

10. Kraftfahrzeugantriebsstrang gemäß Anspruch 9, **dadurch gekennzeichnet, dass** der Verbrennungsmotor (1) eine Motorabtriebswelle (1.1) aufweist, die wahlweise über eine erste Kupplung (12) in eine Triebverbindung; insbesondere rein mechanische Triebverbindung oder hydrodynamische Triebverbindung, mit dem Kompressor (3) schaltbar ist, und im Leistungsfluss zwischen der Expansionsmaschinenabtriebswelle (5.1) und der Kompressorantriebswelle (3.1) eine zweite Kupplung (13) vorgesehen ist, mittels welcher wahlweise eine Triebverbindung zwischen diesen Wellen herstellbar ist, wobei die erste und die zweite Kupplung (12, 13) insbesondere als eine gemeinsame Doppelkupplung mit zwei Leistungseingängen und zwei Leistungsausgängen ausgeführt sind, und ein Leistungseingang und ein Leistungsausgang durch dieselbe Leistungsschnittstelle gebildet werden.

11. Kraftfahrzeugantriebsstrang gemäß einem der Ansprüche 8 und 9 und insbesondere gemäß Anspruch 10, **dadurch gekennzeichnet, dass** in einem der beiden Gehäuse (11) ein Durchtrieb für die Maschine des anderen Gehäuses (11) vorgesehen ist.

12. Kraftfahrzeugantriebsstrang gemäß der Ansprüche 8 und 9 und insbesondere einem der Ansprüche 10 oder 11, **dadurch gekennzeichnet, dass** die Expansionsmaschinenabtriebswelle (5.1) oder die Kompressorantriebswelle (3.1) durch eine Lagerung in, an oder neben dem jeweils anderen Gehäuse (11) und ohne Lagerung im eigenen Gehäuse (11) gelagert ist.

13. Kraftfahrzeugantriebsstrang gemäß einem der Ansprüche 5 bis 12, **dadurch gekennzeichnet, dass** aus dem Kompressor (3) Wärme abgeleitet und dem Dampfkreislauf (6), insbesondere hinter der Flüssigkeitspumpe (9) und vor dem Dampferzeuger (7), zugeführt wird.

14. Kraftfahrzeugantriebsstrang gemäß Anspruch 13, **dadurch gekennzeichnet, dass** das Medium des Dampfkreislaufes wärmeübertragend durch den Kompressor (3), insbesondere dessen Gehäuse (11), geleitet wird.

## Claims

1. Drive train of a motor vehicle, comprising
1.1. a vehicle drive engine for driving the motor vehicle via a vehicle drive shaft (2) driven by the vehicle drive engine;
1.2. a compressor (3) which can be driven optionally or permanently for compressing air for a compressed-air system (4) of the motor vehicle, with
1.3. the compressor (3) being associated with at least one drive unit in the form of a steam-driven expansion machine (5) by which the compressor (3) can be driven;
**characterized in that**
1.4. the compressor (3) can be or is driven by means of the vehicle drive engine and/or an additional drive, and that the steam-driven expansion machine (5) is associated with the compressor (3) as a second drive unit with which the compressor (3) can be driven in addition to the vehicle drive engine and/or the additional drive.

2. Drive train for a motor vehicle according to claim 1, **characterized in that** the vehicle drive engine is a combustion engine (1), and that the additional drive is especially an electric motor.

3. Drive train for a motor vehicle according to one of the claims 1 or 2, **characterized in that** the expansion machine (5) and/or the compressor (3) is/are arranged as a piston engine, especially a rotary combustion engine or reciprocating piston engine.

4. Drive train for a motor vehicle according to one of the claims 1 to 3, **characterized in that** the expansion machine (5) is in a drive connection with the vehicle drive shaft (2) or can be switched into such a connection in order to drive the motor vehicle by means of the expansion machine (5).

5. Drive train for a motor vehicle according to one of the claims 1 to 4, **characterized in that** the expansion machine (5) is arranged in a steam circulation (6), comprising a steam generator (7), a condenser (8) and a fluid pump (9), and the steam generator (7) is supplied with the waste heat from the drive engine of the motor vehicle, especially the combustion engine (1), or with heat from the exhaust gases of the combustion engine (1).

6. Drive train for a motor vehicle according to claim 5, **characterized in that** a burner (10) is additionally provided for supplying the steam generator (7) with combustion heat, with the burner (10) especially being driven with the fuel of the combustion engine (1).

7. Drive train for a motor vehicle according to one of the claims 1 to 6, **characterized in that** the expansion machine (5) and the compressor (3) are arranged in a common housing (11).

8. Drive train for a motor vehicle according to one of the claims 1 to 6, **characterized in that** the expansion machine (5) and the compressor (3) are arranged in separate housings (11).

9. Drive train for a motor vehicle according to one of the claims 1 to 8, **characterized in that** the expansion machine (5) comprises an output shaft (5.1) and the compressor (3) having a compressor drive shaft (3.1) which are arranged separately from one another and which are arranged next to one another especially in the axial direction, advantageously in alignment with each other, adjacent or concentric relative to one another in the radial direction.

10. Drive train for a motor vehicle according to claim 9, **characterized in that** the combustion engine (1) comprises an engine output shaft (1.1) which can optionally be switched into a drive connection especially a purely mechanical drive connection or hydrodynamic drive connection with the compressor (3) via a first clutch (12), and a second clutch (13) is provided in the power flow between the expansion machine output shaft (5.1) and the compressor drive shaft (3.1), by means of which a drive connection can optionally be produced between said shafts, with the first and second clutch (12, 13) being arranged especially as a common double clutch with two power inputs and two power outputs, and one power input and one power output being formed by the same power interface.

11. Drive train for a motor vehicle according to one of the claims 8 and 9 and especially according to claim 10, **characterized in that** a drive-through mechanism is provided in one of the two housings (11) for the machine of the other housing (11).

12. Drive train for a motor vehicle according to claim 8 and 9 and especially one of the claims 10 or 11, **characterized in that** the expansion machine output shaft (5.1) or the compressor drive shaft (3.1) is held by a bearing in, on or adjacent to the respective other housing (11) and without bearing in its own housing (11).

13. Drive train for a motor vehicle according to one of the claims 5 to 12, **characterized in that** heat is derived from the compressor (3) and is supplied to the steam circulation (6), especially behind the fluid pump (9) and before the steam generator (7).

14. Drive train for a motor vehicle according to claim 13, **characterized in that** the medium of the steam circulation is guided in a heat-transmitting manner through the compressor (3), especially its housing (11).

## Revendications

1. Train d'entraînement de véhicule automobile
1.1 pourvu d'un moteur d'entraînement de véhicule pour entraîner le véhicule automobile par un arbre d'entraînement de véhicule (2) entraîné par le moteur d'entraînement de véhicule;
1.2 pourvu d'un compresseur (3) pouvant être au choix menant ou mené de façon permanente, pour comprimer l'air destiné à un circuit d'air comprimé (4) du véhicule automobile; dans lequel
1.3 au moins un groupe d'entraînement sous forme de moteur à expansion à vapeur (5) est associé au compresseur (3), par l'intermédiaire duquel le compresseur (3) peut être entraîné;
**caractérisé en ce que**
1.4 le compresseur (3) peut être entraîné ou est entraîné à l'aide du moteur d'entraînement de véhicule et/ou d'un entraînement supplémentaire, et que le moteur à expansion à vapeur (5) est associé au compresseur (3) en tant que second groupe d'entraînement avec lequel le compresseur (3) peut être entraîné en plus du moteur d'entraînement de véhicule et/ou de l'entraînement supplémentaire.

2. Train d'entraînement de véhicule automobile selon la revendication 1, **caractérisé en ce que** le moteur d'entraînement de véhicule est un moteur à combustion (1), et **en ce que** l'entraînement supplémentaire est en particulier un moteur électrique.

3. Train d'entraînement de véhicule automobile selon l'une des revendications 1 ou 2, **caractérisé en ce que** le moteur à expansion (5) et/ou le compresseur (3) est/sont conçu(s) comme machine à piston, en particulier machine à piston rotatif ou machine à piston alternatif.

4. Train d'entraînement de véhicule automobile selon l'une des revendications 1 à 3, **caractérisé en ce que** le moteur à expansion (5) est en liaison motrice avec l'arbre d'entraînement de véhicule (2) ou peut être commuté de cette manière pour assurer l'entraînement du véhicule automobile à l'aide du moteur à expansion (5).

5. Train d'entraînement de véhicule automobile selon l'une des revendications 1 à 4, **caractérisé en ce que** le moteur à expansion (5) est disposé dans un circuit de vapeur (6), comprenant un générateur de vapeur (7), un condenseur (8) et une pompe de liquide (9), et le générateur de vapeur (7) est sollicité par la chaleur récupérée du moteur d'entraînement de véhicule automobile, en particulier du moteur à combustion (1) ou par la chaleur provenant des gaz d'échappement du moteur à combustion (1).

6. Train d'entraînement de véhicule automobile selon la revendication 5, **caractérisé en ce qu'**en outre un brûleur (10) est prévu pour solliciter le générateur de vapeur (7) avec la chaleur de combustion, où le brûleur (10) est actionné en particulier par le combustible du moteur à combustion (1).

7. Train d'entraînement de véhicule automobile selon l'une des revendications 1 à 6, **caractérisé en ce que** le moteur à expansion (5) et le compresseur (3) sont disposés dans un même carter (11).

8. Train d'entraînement de véhicule automobile selon l'une des revendications 1 à 6, **caractérisé en ce que** le moteur à expansion (5) et le compresseur (3) sont disposés dans des carters séparés (11).

9. Train d'entraînement de véhicule automobile selon l'une des revendications 1 à 8, **caractérisé en ce que** le moteur à expansion (5) présente un arbre de sortie (5.1) et que le compresseur (3) présente un arbre d'entraînement de compresseur (3.1), lesquels sont conçus séparément l'un de l'autre, et qui sont disposés en particulier dans la direction axiale l'un à côté de l'autre, avantageusement alignés l'un par rapport à l'autre, dans la direction radiale l'un à côté de l'autre ou concentriquement l'un par rapport à l'autre.

10. Train d'entraînement de véhicule automobile selon la revendication 9, **caractérisé en ce que** le moteur à combustion (1) présente un arbre de sortie de moteur (1.1), qui peut être connecté au compresseur (3) au choix par le biais d'un premier accouplement (12) pour se trouver en liaison motrice, en particulier une liaison motrice purement mécanique ou bien une liaison motrice hydrodynamique, et en qu'un second accouplement (13) est prévu dans le circuit de puissance entre l'arbre d'entraînement de moteur à expansion (5.1) et l'arbre d'entraînement de compresseur (3.1), par l'intermédiaire duquel au choix une liaison motrice peut être établie entre ces arbres, tandis que le premier et le second accouplement (12, 13) en particulier en tant que double accouplement commun sont pourvus de deux entrées de puissance et de deux sorties de puissance, et qu'une entrée de puissance et une sortie de puissance sont constituées par cette même interface de puissance.

11. Train d'entraînement de véhicule automobile selon l'une des revendications 8 et 9 et en particulier selon la revendication 10, **caractérisé en ce qu'**un relais de transmission est prévu pour le moteur de l'autre carter (11) dans l'un des deux carters (11).

12. Train d'entraînement de véhicule automobile selon l'une des revendications 8 et 9 et en particulier selon l'une des revendications 10 ou 11, **caractérisé en ce que** l'arbre d'entraînement de moteur à expansion (5.1) ou l'arbre d'entraînement de compresseur (3.1) est monté à l'aide d'un ensemble roulement dans, contre ou à côté respectivement de l'autre carter (11) et sans ensemble roulement dans son propre carter (11).

13. Train d'entraînement de véhicule automobile selon l'une des revendications 5 à 12, **caractérisé en ce que** la chaleur est évacuée du compresseur (3) pour être acheminée au circuit de vapeur (6), en particulier en aval de la pompe de liquide (9) et en amont du générateur de vapeur (7).

14. Train d'entraînement de véhicule automobile selon la revendication 13, **caractérisé en ce que** le fluide du circuit de vapeur est acheminé comme caloporteur à travers le compresseur (3), en particulier son carter (11).
